# EUROPEAN PATENT APPLICATION

(11) **EP 4 692 959 A1**
(43) Date of publication of application: **11.02.2026**
(21) Application number: 24778931.6
(22) Date of filing: 26.02.2024
(51) Int. Cl.: G04C 10/02, H02S 10/40

(54) **ELECTRONIC TIMEPIECE**

(30) Priority: 24.03.2023 JP 2023048215
(71) Applicant: Casio Computer Co., Ltd., Tokyo 151-8543 (JP)
(72) Inventor: SAITO Yuta, Hamura-shi, Tokyo 205-8555 (JP)
(74) Representative: Grünecker Patent- und Rechtsanwälte PartG mbB
(86) International application number: PCT/JP2024/006786
(87) International publication number: WO 2024/202788

(57) **Abstract**

Provided is an electronic timepiece capable of achieving both miniaturization and effective power generation and light emission. An electronic timepiece comprising a solar cell (70) having a wiring electrode (71) and a lower electrode (73), which are a pair of electrodes, and a power generation layer (72) that is sandwiched between the pair of electrodes and contains a compound semiconductor material capable of emitting light when a voltage is applied to the pair of electrodes. The electronic timepiece may comprise a plurality of solar cells (70), and the plurality of solar cells may be connected in series. Each wiring electrode (71) on the light incidence side of the pair of electrodes may have an equal contact area with the power generation layer (72).

## Description

### TECHNICAL FIELD

The present disclosure relates to an electronic timepiece.

### BACKGROUND ART

A known electronic timepiece is powered by electricity generated by a solar cell. The solar cell can efficiently generate electricity and charge a secondary battery when the electronic timepiece is used in the daytime or under indoor lighting. The electronic timepiece also includes a light emitter that illuminates the display surface to improve visibility of display in night use or the like. Patent literature 1 discloses a technique that improves the yield rate in production of electronic timepieces that include a solar panel and a light emitter using an electroluminescent (EL) panel.

### CITATION LIST

### Patent Literature

Patent literature 1: Japanese Unexamined Patent Application Publication No. 2002-148361

### SUMMARY OF INVENTION

### Technical Problem

Mounting both a solar cell that receives light and a light emitter that emits light in a small area requires a mounting space. It is difficult to achieve both effective power generation and light emission and miniaturization.

An object of the present disclosure is to provide an electronic timepiece that can achieve both effective power generation and light emission and miniaturization.

### Solution to problem

To achieve the above object, according to the present disclosure, there is provided an electronic timepiece comprising a solar cell that includes: a pair of electrodes; and an active layer that is sandwiched between the pair of electrodes and that includes a compound semiconductor material, the compound semiconductor material being capable of emitting light when a voltage is applied to the pair of electrodes.

### Advantageous Effects of Invention

According to the present disclosure, it is possible to achieve both effective electricity generation and light emission and miniaturization of an electronic timepiece.

### BRIEF DESCRIPTION OF DRAWINGS

[FIG. 1] This is a front view of an electronic timepiece in a first embodiment.
[FIG. 2A] This is a front view of a solar panel.
[FIG. 2B] This is a cross-sectional schematic view of the electronic timepiece.
[FIG. 3A] This is a cross-sectional view of the solar panel.
[FIG. 3B] This is a cross-sectional view of the solar panel.
[FIG. 3C] This is a cross-sectional view of the solar panel.
[FIG. 4] This is a block diagram for explaining a functional configuration of the electronic timepiece.
[FIG. 5] This is a front view of the electronic timepiece in a second embodiment.
[FIG. 6] This is a diagram for explaining the solar cells.
[FIG. 7] This is a diagram for explaining a modification example of the solar panel in the first embodiment.

### DESCRIPTION OF EMBODIMENTS

Hereinafter, embodiments of the present invention are described with reference to the drawings.

### [First Embodiment]

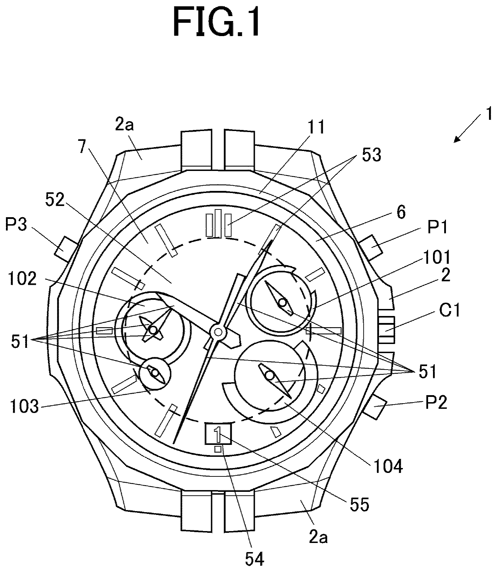

FIG. 1 is a front view of an electronic timepiece 1 in a first embodiment.

The electronic timepiece 1 includes a casing 2, a dial 52, hands 51, a bezel 11, and operation receiving members that receive operations from outside, such as push-button switches P1 to P3 and a crown C1. The hands 51 are rotatably disposed on the dial 52 to indicate contents corresponding to the directions pointed by the hands 51. The contents indicated by the hands 51 include time. Herein, the time may include a date and a day of the week, namely the date and time. On the dial 52, indexes for indicating time (hour markers 53) and so forth are disposed. The dial 52 is made of light-transmissive material.

On the dial 52, small windows 101 to 104 (dials) that cover part of the dial 52 are disposed. Some of the hands 51 rotate inside the respective small windows 101 to 104 to indicate a day of the week, a time for which the alarm is set, times of other cities in the world, and 24 hours, for example. The times of other cities in the world may include the UTC.

The dial 52 has an opening 54 at the six o'clock position. Below (at the back surface side of) the dial 52, a date indicator 55 is disposed. By the rotation of the date indicator 55, an index (date index) having the shape of the number corresponding to the date is selectively shown in the opening 54. The date indicator 55 is positioned between two concentric circles having different radii. The number-shaped members of the date indicator 55 are supported by support arms extending from the two concentric circles. Therefore, part of the date indicator 55 except the number-shaped members transmits light.

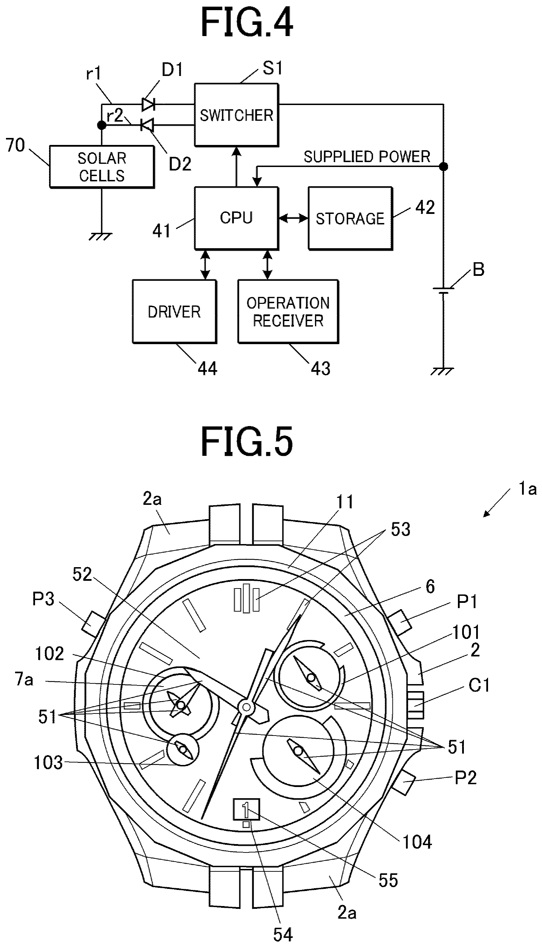

The casing 2 has a cylindrical shape, and the top and bottom surfaces of the casing 2 are open. The casing 2 houses the hands 51, the date indicator 55, the dial 52, the hour markers 53, a circuit board including a CPU (controller, microcomputer) that controls operations such as the timekeeping operation and display operation of the hands 51, a driver 44 (a stepping motor and a gear train, see FIG. 4) that rotates the hands 51 and the date indicator 55 to change their indicating positions, a battery B (see FIG. 4), and so forth. The push-button switches P1 to P3 and the crown C1 project outward from the lateral surface of the casing 2. Electric signals related to manipulations of these members pass through the casing 2 and are transmitted to the internal circuit board. At the twelve o'clock and six o'clock positions of the casing 2, belt attachment parts 2a extend outward from the casing 2 in plan view. The casing 2 may be made of insulating material, such as resin or ceramic, or metal material, such as titanium. The bottom end (the back surface side) of the casing 2 is sealed by a not-illustrated back cover.

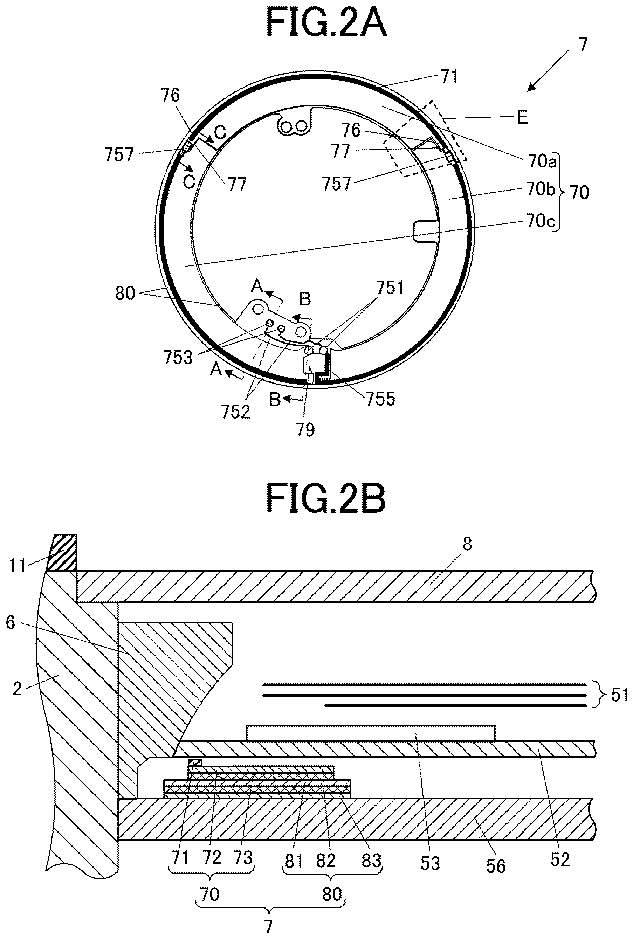

The top end of the casing 2, which is above (at the front side of) the dial 52 and the hands 51, is covered by a transparent windshield member 8 (see FIG. 2B), so that the casing 2 is sealed. The rim of the dial 52 is surrounded by a parting plate 6. Part or all of the hour markers 53 and so forth may be fixed to the parting plate 6. Below the dial 52 and the date indicator 55, a ring-shaped solar panel 7 is disposed along the inner circumference of the parting plate 6 (the outside of the dashed line in FIG. 1). Members that have a low level of light transmittance or that do not transmit light at all, such as the outer frames of the small windows 101 to 104, the hour markers 53, and the date indexes of the date indicator 55, are disposed on part of the light-receiving surface of the solar panel 7.

The bezel 11 is disposed at the peripheral part of the electronic timepiece 1. The bezel 11 may include an index(es) to be pointed by the hands 51. The bezel 11 is also used for a decorative purpose. The bezel 11 may function as an antenna element when the electronic timepiece 1 receives radio waves or performs communications.

Next, the solar panel 7 is described.

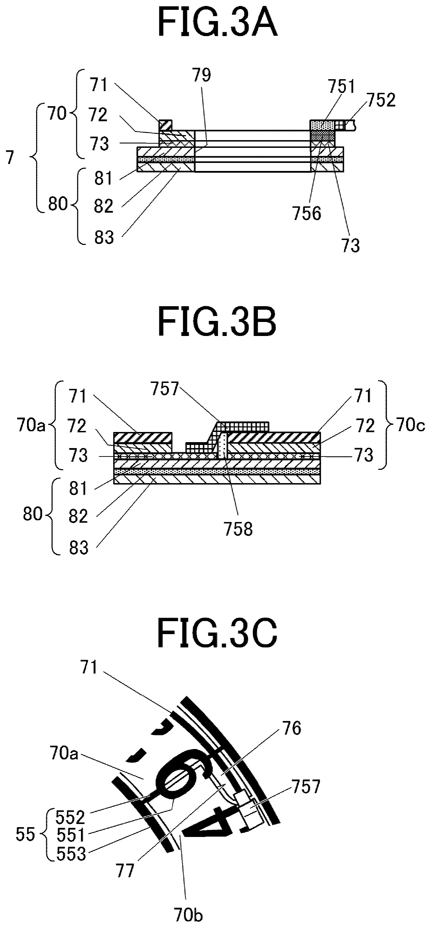

FIG. 2A, FIG. 2B, and FIG. 3A to FIG. 3C are diagrams for explaining the solar panel 7.

As illustrated in the front view of FIG. 2A, the solar panel 7 includes arc-shaped solar cells 70a to 70c. Hereinafter, the solar cells 70a to 70c may be collectively referred to as solar cells 70. These solar cells 70 are arranged substantially in a ring shape and connected in series to each other, so that the solar panel 7 outputs the total electromotive forces of the solar cells 70. Herein, the solar panel 7 can output the total electromotive forces of the three solar cells 70, namely a voltage approximately three times as great as the electromotive force of each solar panel 70. The operating voltage of the electronic timepiece 1 is greater than the electromotive force of each solar cell 70. The solar panel 7, in which the three solar cells 70 are connected in series, can output a charging voltage for the battery of the electronic timepiece 1 and a current corresponding to the charging voltage. The ends of the solar cells 70 connected in series are located at one end of the solar cell 70b and one end of the solar cell 70c, respectively, and are connected to connection electrodes 751 at the six o'clock position.

The solar panel 7 has an opening 79 at the same position as the opening 54 in plan view. Thus, the base plate 56 below the date indicator 55 is exposed in the positional range corresponding to the openings 54 and 79.

FIG. 2B illustrates a schematic cross-sectional view of the electronic timepiece 1 along the section line AA in FIG. 2A. In the schematic cross-sectional view, the date indicator 55 is omitted to simplify the explanation. The solar panel 7 is disposed on the base plate 56, which is disposed below the dial 52. In the solar panel 7, the solar cells 70 are laid on a base body 80. Each solar cell 70 has a plate-like structure in which an active layer 72 is sandwiched between a pair of electrodes consisting of a wiring electrode 71 (first electrode) and a bottom electrode 73. The active layer 72 is a diode and has a layer containing a compound semiconductor material, such as InGaP. Among the electrodes, the wiring electrode 71 is disposed at a side where light enters from outside. The wiring electrode 71 has a linear shape with a narrow width (linear electrode) and is disposed along the outer edge of the solar cell 70. The wiring electrodes 71 of the respective solar cells 70a to 70c are disposed on an identical circumference (on a concentric circle). The wiring electrodes 71 are positioned and shaped so as not to block light entering the active layer 72 to the extent possible. At one end of each of the three solar cells 70a to 70c, a connecting conductor 757 is disposed. The connecting conductor 757 connects the wiring electrode 71 disposed at the upper surface side of the active layer 72 of one solar panel 7 to the bottom electrode 73 disposed at the bottom surface side of another solar panel 7 adjacent to the one solar panel 7.

The base body 80 is an insulating member and supports the solar cells 70. In the base body 80, an insulating layer 81 is adhered to a support film 83 by an adhesive layer 82. The insulating layer 81 is adhered to the solar cell 70. The combination of the insulating layer 81 and the support film 83 can be appropriately determined, based on adhesiveness or followability to the solar cell 70 or the combination with the supporting strength, for example.

The parting plate 6 is mirror-like above the active layer 72. The wiring electrode 71 may be disposed along the inner edge of the parting plate 6. Thus, the light emitted by the wiring electrode 71 is likely to be reflected on the surface of the parting plate 6. Accordingly, indirect light is easily seen from the display surface side, and the hands 51 and so forth disposed at the central part of the display surface are easily illuminated.

One end of the three solar cells 70 connected in series is the wiring electrode 71 of the solar cell 70b, as illustrated in FIG. 2A. The wiring electrode 71 is connected to one of the connection electrodes 751 by a connecting line 755. The connecting line 755 extends along the edge of the solar cell 70b (the opening 79). The connecting line 755 extends on the insulating surface of the edge (the insulating layer 81). The connecting line 755 is not included in the length of the wiring electrode 71 extending on the active layer 72, which is described later. The connection electrodes 751 are connected to pull-out electrodes 753 on the inner side of the ring-shaped solar panel 7 by pull-out lines 752. The pull-out lines 752 and the pull-out electrodes 753 may be disposed on a coating member, such as a laminating film that protects the top surface of the solar cells 70. The surface on which the pull-out lines 752 and the pull-out electrodes 753 are formed is attached to the solar cells 70, so that the connection electrodes 751 are connected to the pull-out lines 752.

FIG. 3A illustrates a schematic cross-sectional view of the solar panel 7 along the section line BB in FIG. 2A.

The bottom electrode 73, which constitutes the other end opposite the one end with the opening 79 in-between, is connected to the connection electrode 751. In plan view, the active layer 72 is removed at a part overlapping with the connection electrode 751, and instead, a connecting conductor 756 is disposed in this part. The connecting conductor 756 electrically connects the bottom electrode 73 to the connection electrode 751.

The solar cell 70a is connected to the solar cell 70b and the solar cell 70c by connecting conductors 757, as illustrated in FIG. 2A.

FIG. 3B illustrates a schematic cross-sectional view along the section line CC in FIG. 2A.

On the section line CC, the bottom electrode 73 of the solar cell 70a is connected to the wiring electrode 71 of the solar cell 70c by the connecting conductor 757. At the part where the connecting conductor 757 is connected to the bottom electrode 73, the wiring electrode 71 and the active layer 72 are removed and a gap is formed. The connecting conductor 757 extends over a boundary wall 758 between the solar cell 70a and the solar cell 70c and extends onto the wiring electrode 71 of the solar cell 70c.

The solar cells 70a to 70c have different power generation efficiencies depending on the area of each solar cell 70 covered by members that do not transmit light, such as the hour markers 53 and the frames of the small windows 101 to 104 disposed above part of the solar cell 70, as described above. It is preferable that the members that do not transmit light be disposed at the boundaries between the solar cells 70a to 70c to restrain a decrease in power generation efficiency. For example, in FIG. 1, the hour marker of six o'clock adjacent to the opening 54 overlaps with part of the boundary between the solar cells 70b and 70c. Further, the frame of the small window 101 overlaps with part of the boundary between the solar cells 70a and 70b. FIG. 3C illustrates an enlarged view of the part around the boundary between the solar cells 70a and 70b with the date indicator 55 superposed. In a state where the date is stationarily shown, the date index 551 and the arm part 552 that fixes the date index 551 to a ring-shaped rotatable frame body 553 overlap with the gap between the solar cells 70a and 70b.

However, it is difficult for these members to completely avoid positions where the members block light entering the solar cells 70, depending on the shapes and sizes of the members. The sizes of the respective three solar cells 70a to 70c are adjusted such that they can generate the same amount of electricity when light uniformly enters parts where light can enter in such a state. In this embodiment, the solar cells 70 have different light-receiving surface areas, namely different angular widths with respect to the center of the solar cells 70 arranged in a ring shape. As illustrated in FIG. 1, the small windows 101 to 104 are disposed at positions of two o'clock, nine o'clock, eight o'clock, and half past four on the dial 52, respectively. Therefore, the frames of the small windows 101 to 104 cover greater areas on the solar cells 70b and 70c at the four o'clock and eight o'clock positions (second solar cell) than on the solar cell 70a at the twelve o'clock position (first solar cell). Correspondingly, as illustrated in FIG. 2A, at least part of the solar cells 70 (herein the solar cell 70a at the twelve o'clock position) has a different angle width from that of the other solar cells 70b and 70c at the four o'clock and eight o'clock positions. The angle width of the solar cell 70a is narrower than that of the solar cells 70b and 70c.

The solar cells 70b and 70c may not be disposed at a part corresponding to the opening 54, which shows the date index of the date indicator 55, at the six o'clock position of the display surface of the electronic timepiece 1. For example, the part may be colored with a background color that makes the date index clearly visible. On the other hand, at parts other than the opening 54, the solar panel 7 and the date indexes have similar colors so that the date indexes are inconspicuous through the dial 52.

When a voltage (forward voltage) is applied to the diode structure of the solar panel 7, the diode structure emits light as a light emitting diode (LED). When the compound semiconductor material is InGaP, red light (center wavelength of 664.5 nm) is emitted. The electronic timepiece 1 in this embodiment uses the solar cells 70 as the LED as well to reduce the volume of an additional LED, so that the electronic timepiece 1 can be made light and compact.

The compound is not limited to the above. For example, when AlInGaP is used, the light has an orange-like color with a slightly shorter wavelength than the light emitted by InGaP. Making the wavelength slightly shorter than the red light greatly improves human color sensitivity, and light emitting efficiency improves. Other compound semiconductor materials that emit light having an appropriate wavelength band and that achieve sufficient power generation efficiency may be used.

Herein, the distribution of light emission intensity depends on the current density at each part of the active layer 72. When the thin wiring electrode 71 is disposed on the active layer 72 as described above, the light emission amount (current density) of the active layer 72 becomes large along the wiring electrode 71. On the other hand, in the vicinity of the inner edge of the active layer 72, the light emission amount is relatively small. That is, the light emission by the active layer 72 is non-uniform.

The overall current that flows through the three solar cells 70 arranged in series is constant. On the other hand, the density of current that flows across the active layer 72 in the top-bottom direction in each solar cell 70 depends on the length of the wiring electrode 71 because the cross-sectional area (width and thickness) of the wiring electrode 71 perpendicular to the circumferential direction is uniform. As described above, the solar cells 70 have different angular widths. If the wiring electrodes 71 have lengths corresponding to the different angular widths, the solar cell 70 having a narrower angular width yields a relatively greater light emission intensity.

The electronic timepiece 1 is configured such that the wiring electrodes 71 have a uniform length while the difference in the surface area is maintained among the solar cells 70. That is, the contact area between each wiring electrode 71 and the corresponding active layer 72 is uniform among the wiring electrodes 71. Herein, "uniform" includes a margin of error that is normally expected in design and production. To make the length of the wiring electrodes 71 uniform, the solar cell 70a (first solar cell) includes protrusions 76 that partially extend in the circumferential directions along the outer edge. The solar cells 70b and 70c (second solar cell) have notches 77 that are located along the outer edge to complement the protrusions 76. In other words, at least one end of each solar cell 70 in the circumferential direction is crank-shaped. The wiring electrode 71 of the solar cell 70a extends into the protrusions 76 along the outer edge. On the other hand, the wiring electrodes 71 of the solar cells 70b and 70c, which are on the same circumference as the wiring electrode 71 of the solar cell 70a, are each shortened by the length of the notch 77 along the outer edge. That is, the length of the wiring electrode 71 of the solar cell 70a is elongated by the protrusions 76, as compared with the angle width of the solar cell 70a. On the other hand, the length of the wiring electrode 71 of each of the solar cells 70b and 70c is shortened by the notch 77, as compared with the angle width of each of the solar cells 70b and 70c. The lengths of the wiring electrodes 71 are made uniform by appropriately determining the length of the protrusions 76.

The mirror-like parting plate 6 as described above reflects light from the solar panel 7. A higher proportion of reflected light with respect to directly emitted light provides softer indirect illumination of the solar panel 7, which illuminates the dial 52 and the hands 51.

FIG. 4 is a block diagram for explaining a functional configuration of the electronic timepiece 1.

The electronic timepiece 1 includes a central processing unit (CPU) 41, a storage 42, an operation receiver 43, and a driver 44. The electronic timepiece 1 includes a battery B, a switcher S1, and diodes D1 and D2 as a configuration related to power supply in addition to the solar cells 70.

The CPU 41 is a processor that performs arithmetic calculations and centrally controls overall operations of the electronic timepiece 1. The CPU 41 may be a single processor or may be multiple processors that operate in parallel or independently depending on the operation or the purpose of usage.

The storage 42 includes a random access memory (RAM) as a volatile memory and a flash memory as a nonvolatile memory. The RAM 12 provides the CPU 41 with a working memory space and stores temporary data. The nonvolatile memory stores and retains programs related to operation control and various kinds of setting data. The programs include a program for switching between power generation operation and light emission operation of the solar cells 70.

The operation receiver 43 detects input operations on the push-button switches P1 to P3 and the crown C1 and outputs operation signals corresponding to the detected contents to the CPU 41.

The driver 44 includes a stepping motor that applies rotational torque to the gear train (wheel train mechanism) for rotating the hands 51 and a drive circuit that outputs operating voltage signals for the stepping motor under the control of the CPU 41. When the stepping motor rotates by a predetermined angle, each hand 51 rotates by an angle corresponding to the rotation ratio determined by the wheel train mechanism.

The switcher S1 is disposed between the solar cells 70 and the battery B. The switcher S1 selectively switches between a route 1 (first route) that passes through the diode D1 and a route 2 (second route) that passes through the diode D2. The anode of the diode D1 is connected to the solar cells 70. The cathode of the diode D2 is connected to the solar cells 70. When the route r1 via the diode D1 is selected and the solar cells 70 is generating an electromotive force greater than or equal to the voltage of the battery B, the solar cells 70 outputs a current corresponding to the electromotive force via the diode D1 and thereby charges the battery B. When the electromotive force of the solar cells 70 is insufficient, the voltage of the battery B is shut off by the diode D1, and a current does not flow to the solar cells 70.

When the route r2 via the diode D2 is selected by the switcher S1 and the voltage of the battery B is greater than the electromotive force of the solar cells 70, the voltage is applied to the solar cells 70 by the battery B via the diode D2. Accordingly, the solar cells 70 emit light. When the electromotive force of the solar cells 70 is greater than the voltage of the battery B, the diode D2 blocks the connection between the solar cells 70 and the battery B.

The switcher S1 is normally in a state of selecting the route r1 via the diode D1 (a first mode). In the first mode, when the electromotive force of the solar cells 70 is greater than the voltage of the battery B, the solar cells 70 operate as a charger that charges the battery B. When a predetermined switch among the push-button switches P1 to P3 is pushed, the CPU 41 outputs a control signal corresponding to the push to the switcher S1. In response to the control signal, the switcher S1 selects the route r2 via the diode D2 during a set period (a second mode). In the second mode, when the voltage of the battery B is greater than the electromotive force of the solar cells 70, the solar cells 70 operate as the LED and emit light.

The switcher S1 may include a switching element, such as a MOSFET, for example. An N-channel MOSFET may be disposed on the route r2 so that the route r2 via the diode d2 is selected in response to a positive voltage control signal related to lighting up the solar cells 70. A P-channel MOSFET may be disposed on the route r1 via the diode D1.

### [Second embodiment]

FIG. 5 is a front view of the electronic timepiece 1a in a second embodiment.

The electronic timepiece 1a includes a solar panel 7a inside the small window 102 instead of the solar panel 7, which is disposed along the inner edge of the parting plate 6 of the electronic timepiece 1 in the first embodiment. The other aspects of the configuration are the same and denoted by the same reference numerals, and description thereof is omitted.

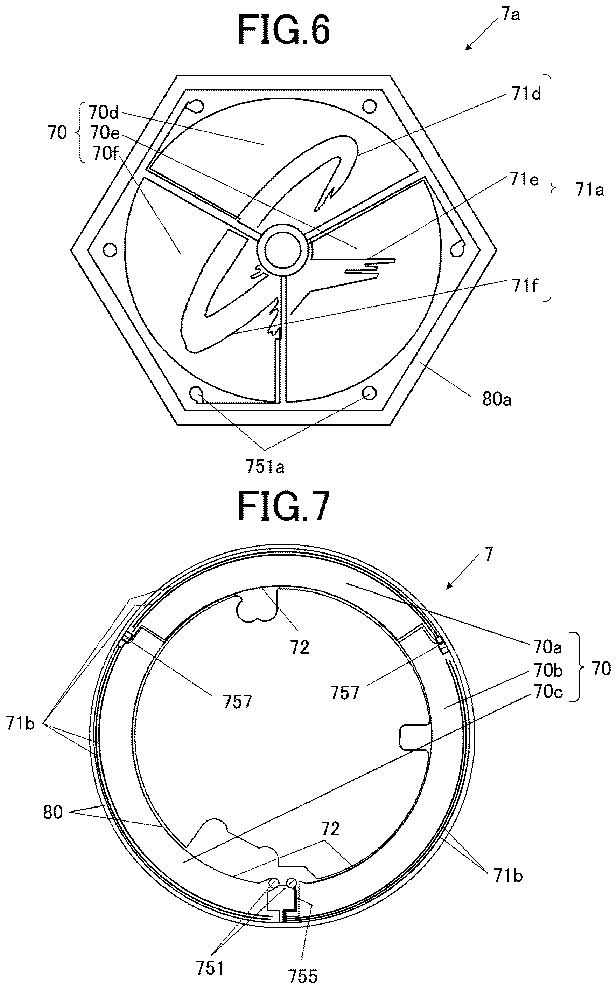

FIG. 6 is a diagram for explaining the solar panel 7a.

The solar panel 7a includes three fan-shaped solar cells 70d to 70f. The solar cells 70d to 70f may have different sizes depending on their power generation efficiencies, as with the solar cells 70a to 70c of the electronic timepiece 1. The solar cells 70d to 70f are disposed on the base body 80a that includes these solar cells 70d to 70f in plan view. The base body 80a may be an insulating member having a regular hexagonal shape in plan view and may have the same three-layer structure as the base body 80 of the first embodiment. The base body 80a is not specifically limited thereto, though.

The wiring electrodes 71d to 71f are disposed on the top surfaces of the respective solar cells 70d to 70f. Hereinafter, the wiring electrodes 71d to 71f are also collectively referred to as wiring electrodes 71a. In the electronic timepiece 1a of this embodiment, the wiring electrodes 71a are disposed along the outline of a character(s), pattern(s), or drawing(s). That is, intense light is generated along the wiring electrodes 71a and depicts a character, figure, or the like having the outline corresponding to the wiring electrodes 71a. The lengths of the wiring electrodes 71a should be within the range of not affecting power generation.

Since the lengths of the wiring electrodes 71d to 71f are made uniform, their light emission intensities are made uniform, and uneven luminescence does not occur. Both ends of each of the wiring electrodes 71d to 71f are at the boundaries between the solar cells 70d to 70f. One end of each of the wiring electrodes 71d to 71f extends along a gap formed at the boundary between the solar cells 70d to 70f and is pulled outside the solar cells 70. Pull-out electrodes 751a are disposed at both ends of each of the three solar cells 70d to 70f connected in series, and are connected to both ends of the battery that supplies a light emission voltage. Thus, according to the electronic timepiece 1a, the solar panel 7a operates as the LED in accordance with control signals.

The operation of lighting up a character(s) and/or pattern(s) may be performed along with an alarm sound or vibration at the time of alarm notification operation, for example. For another example, the lighting-up operation may be performed in response to a push of a predetermined switch among the push-button switches P1 to P3.

Since the power generation and light emission are done only in the specific small window 102, other parts of the dial 52 can be designed without consideration of entrance of light to the solar panel 7a. Thus, flexibility in designing the display surface can be easily improved.

As described above, the electronic timepiece 1 of this embodiment includes the solar cells 70 each of which includes: the wiring electrode 71 and the bottom electrode 73 that constitute a pair of electrodes; and the active layer 72 that is sandwiched between the pair of electrodes and contains a compound semiconductor material. The compound semiconductor material can emit light when a voltage is applied to the pair of electrodes.

The solar cells 70 of the electronic timepiece 1 can operate not only as a power generator related to charging but also as a light emitter when a voltage is applied between the electrodes. Such an electronic timepiece 1 can save space and can be made compact and lightweight, as compared with a configuration that includes both a power generator and a light emitter. The operation as the power generator at a part that receives a large amount of incident light and the operation as the light emitter at a part that receives a small amount of incident light are almost exclusive. Therefore, the electronic timepiece 1 is less likely to cause a functional defect or inconvenience for the user. The electronic timepiece 1 can efficiently perform both power generation and light emission.

Further, the electronic timepiece 1 includes multiple solar cells 70a to 70c. The multiple solar cells 70a to 70c are connected in series. The contact area between each wiring electrode 71 in the pair of electrodes (wiring electrode 71 and bottom electrode 73) and the corresponding active layer 72 is uniform.

Since the light emission by the active layer 72 concentrates on the current channel from the wiring electrode 71 to the bottom electrode 73, the light emission intensity is greater in the vicinity of the wiring electrode 71 than in the surrounding areas. In a part having a great light emission intensity, uneven luminescence is conspicuous. When the contact areas are made uniform, the current densities from the wiring electrodes 71 to the active layers 72 become substantially uniform. Accordingly, the electronic timepiece 1 can restrain unevenness in the light emission intensity.

Further, at least part of the solar cells 70 may have a different light-receiving surface area from that of the other solar cell 70. Preferably, the solar cells 70 have the same level of electromotive force. Like the electronic timepiece 1, in a case where the region for arranging the solar cells 70 is limited and the solar cells 70 cannot completely avoid the effect of other members, the solar cells 70 may have different surface areas in consideration of the effect. That is, the solar cell 70 covered by other members may have a correspondingly greater size. Thus, the electromotive force of the electronic timepiece 1 can be efficiently adjusted without the need of arranging the solar cells 70 and other members such that the solar cells 70 completely avoid other members.

Further, the solar cells 70 may each have an arc shape and may be arranged substantially in a ring shape as a whole. The wiring electrodes 71 are linear electrodes each extending along the outer edge of the arc shape.

Thus, the wiring electrodes 71 are less likely to block entering light related to power generation by the solar cells 70.

Further, like the electronic timepiece 1a of the second embodiment, the wiring electrodes 71 may be linear electrodes, and the linear electrodes corresponding to the respective solar cells 70d to 70f may have the same length. On the contrary to the electronic timepiece 1 of the first embodiment, the electronic timepiece 1a may perform specific display by using intense light emission along the wiring electrodes 71a. In this case, the electronic timepiece 1a can avoid uneven light intensity because the wiring electrodes 71a have a uniform length.

Further, the solar cell 70a includes the protrusions 76 that partially protrude from its ends along the substantially ring-shaped outer edge. The solar cells 70b and 70c have the notches 77 that are located to complement the protrusions 76. The wiring electrodes 71 are linear electrodes. The wiring electrode 71 of the solar cell 70a and the wiring electrodes 71 of the solar cells 70b and 70c are disposed on the same arc that passes through the protrusions 76 and the notches 77, and have the same length for the respective solar cells 70a to 70c. According to the electronic timepiece 1, the solar cells 70 have the protrusions 76 and the notches 77 along the circumferential direction and thereby have partially different lengths along the arc. This makes it possible to appropriately adjust the lengths of the linear wiring electrodes 71 while avoiding a significant change in the area ratio among the solar cells 70.

Further, the electronic timepiece 1 includes the switcher S that switches between the first mode in which the electromotive force of the solar cells 70 is output and the second mode in which a voltage is applied to the solar cells 70. The electronic timepiece 1 can appropriately emit light in response to a request by the user and so forth. When the solar cells 70 do not emit light, the electronic timepiece 1 can output an electromotive force corresponding to the input light.

Further, the electronic timepiece 1 includes the first route r1 and the second route r2. By the first route r1, the electromotive force of the solar cells 70 is output in the first mode. By the second route r2, a voltage is applied to the solar cells 70 in the second mode.

With such individual input-output routes, the electronic timepiece 1 can restrain backflow corresponding to the magnitude of the electromotive force of the solar cells 70 and the magnitude of the voltage of the battery B. Thus, the electronic timepiece 1 can switch between power generation and light emission of the solar cells 70 with simple wiring.

Further, the wiring electrodes 71 may form a pattern or a character in plan view. Since the lengths of the wiring electrodes 71a are made uniform as described above, unevenness on the character or pattern is restrained, and the electronic timepiece 1 can appropriately display the character or pattern.

Further, at least part of the boundary between the solar cells 70 may be covered by members that do not transmit light, such as the hour markers 53, the frames of the small windows 101 to 104, and the date indicator 55 (in a stationary state). The boundary part does not emit light at all when the solar cells 70 emit light. Overlapping the members that do not directly emit light with the boundary part can make the gap between light emission parts inconspicuous in the electronic timepiece 1/1a.

The above embodiment does not limit the present invention and can be variously modified. For example, in the above embodiment, if the electromotive force of the solar cells 70 is greater than the voltage of the battery B, the route may not be switched from the route r1 to the route r2 even when the route r2 is selected. Further, the switcher S1 may include a different known circuit configuration that can switch between the route r1 and the route r2. For another example, if the switcher S1 can appropriately switch between power generation and light emission without the need of the individual routes r1 and r2, a common single route may be connected to the solar cells 70.

Further, although there are three solar cells 70 in the above embodiment, the number of solar cells is not limited thereto. There may be two solar cells 70 or four or more solar cells 70, depending on the required total voltage.

Although the amounts of light emitted by the respective solar cells 70 are made uniform in the above embodiment, the present invention is not limited thereto. For example, the ratio of lengths of the wiring electrodes 71/71a may be determined such that part of characters or symbols emits a less or greater amount of light than the other part.

Although the wiring electrodes 71/71a are described as linear in the above embodiment, the thickness of the wiring electrodes 71/71a may not be uniform. The wiring electrodes 71/71a may be partially thick or narrow in consideration of design.

There may be multiple wiring electrodes 71 extending in parallel.

FIG. 7 is a modification example of the solar panel 7 in the first embodiment.

There may be two wiring electrodes 71b extending in parallel. With the multiple wiring electrodes 71b, the electronic timepiece 1 can continue power generation operation by the solar cells 70 even if one of the wiring electrodes 71b is cut off.

In the electronic timepiece 1a of the second embodiment, the wiring electrodes 71a may be disposed along the inner edge of the frame of the small window 104 and may not form a character or a figure. In this case, the form of the frame of the small window 104 may be determined such that the light emitted from the solar cells 70 becomes indirect light as much as possible.

Although the electronic timepiece 1/1a in the above embodiments performs indication with the hands 51, the present invention is not limited to this. The electronic timepiece may perform indication digitally.

The configuration of the electronic timepiece 1/1a (e.g., whether to include the dial 52 and the date indicator 55 and their positional relation with the solar cells 70) may be appropriately determined depending on the design such that the solar cells 70 can perform power generation and light emission.

The detailed configurations, contents and orders of processing operations, and so forth shown in the above embodiments can be appropriately modified without departing from the scope of the present invention. The scope of the present invention includes the scope of the invention described in the claims and their equivalents.

### Industrial Applicability

The present disclosure is applicable to an electronic timepiece.

### Reference Signs List

70, 70a to 70f: Solar cells, 71, 71a, 71b, 71d to 71f: Wiring electrode, 72: Active layer, 73: Bottom electrode

## Claims

1. An electronic timepiece comprising a solar cell that includes:
a pair of electrodes; and
an active layer that is sandwiched between the pair of electrodes and that includes a compound semiconductor material, the compound semiconductor material being capable of emitting light when a voltage is applied to the pair of electrodes.

2. The electronic timepiece according to claim 1, comprising multiple solar cells each of which is the solar cell, wherein:
the multiple solar cells are connected in series,
first electrodes each constituting the pair of electrodes are disposed at a light entering side, and
a contact area between each of the first electrodes and the active layer is uniform.

3. The electronic timepiece according to claim 2, wherein at least part of the solar cells has a light receiving surface area different from a light receiving surface area of the other solar cell.

4. The electronic timepiece according to claim 2 or claim 3, wherein:
the solar cells each have an arc shape and are arranged substantially in a ring shape as a whole, and
the first electrodes are linear electrodes each extending along an outer edge of the arc shape.

5. The electronic timepiece according to any one of claims 2 to 4, wherein:
the first electrodes are linear electrodes, and
the linear electrodes corresponding to the respective solar cells have a uniform length.

6. The electronic timepiece according to claim 4, wherein:
the solar cells include a first solar cell and a second solar cell disposed side by side,
the first solar cell includes a protrusion that partially protrudes along the outer edge from an end,
the second solar cell has a notch that is located to complement the protrusion,
the first electrodes are linear electrodes,
the first electrode of the first solar cell and the first electrode of the second solar cell are disposed on an identical arc that passes through the protrusion and the notch, and
the first electrodes corresponding to the respective solar cells have a uniform length.

7. The electronic timepiece according to any one of claims 1 to 6, further comprising a switcher that switches between a first mode in which an electromotive force of the solar cell is output and a second mode in which a voltage is applied to the solar cell.

8. The electronic timepiece according to claim 7, further comprising:
a first route that outputs the electromotive force in the first mode; and
a second route that supplies the voltage to be applied in the second mode.

9. The electronic timepiece according to claim 2 or claim 3, wherein the first electrodes are linear electrodes and form a pattern or a character in plan view.

10. The electronic timepiece according to any one of claims 2 to 6, wherein at least part of a boundary between the solar cells is covered by a member that does not transmit light.
